# EUROPEAN PATENT SPECIFICATION

(11) **EP 1 601 470 B1**
(45) Date of publication and mention of the grant of the patent: **31.05.2006**
(21) Application number: 04717640.9
(22) Date of filing: 05.03.2004
(51) Int. Cl.: B05D 7/00, C09D 151/06, C09D 123/26

(54) **METHOD AND PRIMER COMPOSITION FOR COATING A NON-POLAR SUBSTRATE**
VERFAHREN UND GRUNDIERUNGSZUSAMMENSETZUNG ZUR BESCHICHTUNG EINES UNPOLAREN SUBSTRATES
METHODE ET COMPOSITION D'APPRET POUR REVETEMENT D'UN SUBSTRAT NON POLAIRE

(30) Priority: 07.03.2003 US 384041
(43) Date of publication of application: 07.12.2005
(73) Proprietor: Akzo Nobel Coatings International B.V., 6824 BM Arnhem (NL)
(72) Inventor: YAHKIND, Alexander, Leo, West Bloomfield, MI 48323 (US); PAREKH, Dhruv, Vrajlal, Troy, MI 48083 (US); QIU, Xueting, West Bloomfield, MI 48323 (US)
(74) Representative: Schalkwijk, Pieter Cornelis
(86) International application number: PCT/EP2004/002375
(87) International publication number: WO 2004/078365

(56) References cited:
- DE-A- 19 930 067

## Description

### Field of the Invention

The present invention relates to a method and a primer for treating non-polar substrates. Non-polar substrates are substrates of materials not allowing free movement of electrons, such as thermoplastic polyolefinic substrates. The use of thermoplastic olefins, such as polypropylene, continues to increase, particularly in the automotive industry, due to the low costs of such materials and their mouldability and recycling capability. However, because of the very low surface tension of such materials, painting such substrates requires special pre-treatment techniques.

### Background of the Invention

Often used pre-treatment techniques are for instance flame treatment or corona discharge. These techniques have major safety deficiencies. Another pre-treatment technique is the application of adhesion promoters, such as chlorinated polyolefins. Coatings based on chlorinated polyolefins are generally applied at low solids and are usually made conductive to ease electrostatic application of subsequent coating layers. However, chlorinated polyolefins are expensive and were found to have a negative impact on chemical resistance.

In addition, non-chlorinated polyolefins have been tried, but, as with chlorinated polyolefins, these adhesion promoters decrease chemical resistance. Moreover, adhesion to further coating films applied on such primers was found to be selective based on the top coat.

### SUMMARY OF THE INVENTION

The object of the invention is to provide a primer showing good adhesion to non-polar substrates as well as to further coating layers applied on a layer of the primer, without decreasing chemical resistance. A further object of the invention is a method of coating a non-polar substrate resulting in good primer /substrate adhesion, as well as good adhesion between the primer and a further coating applied upon the primer.

### DETAILED DESCRIPTION OF THE INVENTON

The object of the invention is achieved by a method of coating a non-polar substrate comprising the steps of applying a primer comprising one or more silane-functional non-polar polymers on the substrate and applying a layer of a pigmented coating over the primer layer. Non-polar polymers are polymers having backbones which are substantially free of ionic or other polar groups other than the silane-functional groups. In this respect, "substantially free" means less than about 5 % by weight of the polymer, preferably less than about 1 % by weight.

It has been found that the method according to the present invention results in excellent primer - substrate adhesion, also when coated with high- or low-bake base coat / clear coat systems. Surprisingly, the primers not only showed excellent adhesion to the non-polar substrates but also to the further pigmented coating layers applied thereon, which generally are more polar in nature. Substrates coated using a method according to the invention show good chemical resistance, particularly gasoline resistance, and good results in thermal shock and water jet tests. The primers appeared to be particularly suitable for thermoplastic polyolefinic substrates, e.g., rubber-modified polypropylene substrates.

Suitable silane-modified polymers which can be used in embodiments of a primer according to the present invention are silane-modified polyolefins, particularly alpha-polyolefins, homo- or copolymers of olefins, e.g., polyethylene, polypropylene, polybutylene, ethylene-propylene, ethylene-heoylene, ethylene-butylene-styrene, ethylene-vinyl esters (e.g. ethylene-vinyl acetate), ethylene(meth)acrylic acid esters (e.g. ethylene-ethyl acrylate, ethylene-methyl acrylate, and ethylene-butyl acrylate). A particularly suitable example of a commercially available silane-modified polyolefin is Vestoplast® 206, available from Degussa.

The polymer used in the primer may comprise up to 20% of silane functional groups, e.g., between 0.1 - 10 %, or between 0.5 - 6% by weight of the polymer.

The primer typically comprises one or more solvents to obtain a required viscosity. To this end, solvents such as aromatic (e.g. xylene and/or toluene) or aliphatic hydrocarbons, esters, ethers, alcohols, ketones, ether acetates or mixtures thereof can be used. A particularly suitable solvent is for instance Aromatic® 100 commercially available from Exxon - Mobil, which is a mixture of aromatic hydrocarbons giving a better solution appearance and having a lower hazardous air pollutant content than xylene or toluene. A suitable non-aromatic solvent is for instance VMP® Naphtha, available from Ashland Chemical Company. Mixtures of two or more of these solvents can also be used. For example, toluene, xylene and/or VMP® Naphtha can be used alone or in conjunction with Aromatic® 100 to achieve the desired drying characteristics and solubility. The solids content can for instance range from about 15 wt.% to about 35 wt%, but lower or higher solids contents may be used if so desired.

Under the influence of moisture, the silane group is hydrolyzed forming silanol groups. The polymer can subsequently be cross-linked, e.g. by silanol condensation or by reaction with hydroxy-functional polymers. Silanol condensation reactions can be catalyzed by a silanol condensation catalyst such as metal carboxylates, e.g. dibutyl tin dilaurate, organometallics, e.g. tetrabutyl titanate, organic bases, e.g. ethylamine, and mineral and fatty acids., Further suitable catalysts are disclosed in US-A-3,646,155. The catalyst may optionally be used in an amount of 0.004 - 0.2 %, e.g., from 0.01 - 0.1% by weight of the primer composition.

The primer composition may also comprise further components such as fillers or pigments. Suitable fillers are for instance talc and calcium carbonate. Organic or inorganic pigments, such as titanium dioxide, can be used. Conductive pigments, such as conductive carbon black, can also be used.

The primer composition of the current invention may also contain other additives. Typical additives are, for non-limiting example, dispersing agents, for instance soya lecithin; reactive diluents; plasticizers; levelling agents, for instance acrylate oligomers; anti-foaming agents, for instance silicone oil; metal salts of organic acids, such as cobalt of ethyl hexanoate; chelating agents; rheology control agents, for instance bentonites, pyrolized silica, hydrogenated castor oil derivatives, and adducts of a di- or tri-isocyanate to a monoamine; antioxidants, such as substituted phenols; and UV stabilizers, such as benzophenones, triazoles, benzoates, and hindered bipiridyl amines.

The addition of one or more alkylated aromatic hydrocarbon resins to the primer composition was observed to significantly improve the in-can stability of the primer. A commercially available example of a suitable resin is Nevchem® 140, available from Neville Chemical Company

The primer is particularly suitable for use with non-polar substrates, such as thermoplastic polyolefin substrates, e.g., substrates made of polypropylene or polyethylene.

As is usual for instance in the automotive industry, the coating composition applied over the primer can be a base coat which is in turn coated with a clear coat. Optionally, such base coat / clear coat systems may be applied by means of a wet-on-wet process. In such a process, the primer is applied on the non-polar substrate, flash dried, e.g., for about five minutes, and coated with a base coat. After flash drying of the base coat layer, e.g., for about five minutes, a clear coat is applied on the base coat Subsequently, the primer, base coat, and clear coat are jointly cured, for instance by baking or UV curing or any other suitable curing method.

Instead of using a base coat / clear coat system, a mono coat system can be used if so required. In a mono coat system, a single pigmented coating is applied on the primer layer, without the use of a clear coat.

The base coat, mono coat and / or clear coat can for instance be water borne or solvent borne coatings. Solvent borne base coats may be combined with water borne clear coats, and the other way around, if so desired.

The base coat, clear coat or mono coat can be based on any suitable cross-linking or curing mechanism. The coatings can be 1K or single component systems using blocked or latent cross-linkers. Alternatively, 2K or multicomponent coatings can be used, wherein cross-linkers and co-reactive binders are stored separately and mixed just before or during application.

A suitable crosslinking mechanism for base coat and clear coat systems is for instance NCO - OH cross-linking, generally embodied by a polyisocyanate cross-linker and a hydroxy-functional resin, or the other way around if so desired.

Examples of suitable polyisocyanates include 1,6-hexane diisocyanate, 1,6-hexamethylene diisocyanate, isophorone diisocyanate, tetramethylxylylene, 2-methyl-1,5-pentane diisocyanate, 2,2,4-trimethyl-1,6-hexamethylene diisocyanate, 1,12-dodecane diisocyanate, methylene bis(4-cyclohexyl isocyanate) or bis(isocyanate cyclohexyl) methane and their adducts, such as biurets or isocyanurates. A suitable biuret is for instance the biuret of 1,6-hexamethylene diisocyanate, commercially available as Desmodur® N from Bayer. Examples of suitable isocyanurates are the isocyanurate of 1,6-hexamethylene diisocyanate and the isocyanurate of isophorone diisocyanate, commercially available as Desmodur® N-3390 and Desmodur® Z-4370, respectively, both from Bayer. Generally, the NCO:OH ratio is in the range of 0.5-3:1, such as 1-2:1.

To prevent premature cross-linking, the cross-linkers and the co-reactive compounds are separately packed and mixed only just before or during application (generally referred to as a 2K or two-component system). Alternatively, one of the cross-linking functionalities can be blocked, thus allowing the mixture of all components in a single pack or container (1 K or one-component systems). The blocked component can be unblocked under the influence of, e.g., raised temperature, moisture, light, etc. Suitable blocking agents for isocyanates are for instance ketoximes, malonic esters or acetoacetates. Suitable monofunctional blocking agents are for instance malonic acid diethyl ester, ethyl acetoacetate, ε-caprolactam, butanone oxime, cyclohexanone oxime, 1,2,4-triazole, dimethyl-1,2,4-triazole, 3,5-dimethyl pyrazole or imidazole. Preferably, blocking agents are used which are cleaved off within the temperature range up to 160°C, more preferably up to 150°C.

Isocyanate cross-linkers can be used not only in NCO / OH curing systems, but also in combination with resins comprising functional groups having active hydrogens, such as polythiols or polyamines.

Further suitable cross-linkers for hydroxy-functional compounds are for instance melamine cross-linkers. Examples of suitable melamines are partially and fully alkylated melamine formaldehyde condensates, e.g., methylated melamine formaldehyde resins. Particular examples are hexamethoxymethyl melamine (e.g., Cymel® 303), mixed ether methoxy / butoxy methyl melamine (e.g., Cymel® ' 1135), high imino polymeric methoxymethyl melamine (e.g., Cymel® 325), all mentioned Cymel® products being commercially available from Cytec Industries Inc.

The primer can be applied to the substrate in any suitable manner, such as by roller coating, spraying, brushing, flow coating, or dipping. The primer is typically applied in a dry film layer thickness of about 5-10 micrometers, e.g. 6 - 8 micrometers. The base coat layer or mono coat layer is generally applied in a dry film layer thickness of 20 - 50 micrometers, e.g. of 30 - 40 micrometers. If a clear coat is applied, the dry film layer thickness typically is about 40 - 50 micrometers.

The invention is further described and illustrated by the following examples. In the examples, all amounts of contents are given in parts by weight, pbw, unless indicated otherwise.

### Example 1

Vestoplast® 206, a silane-modified polyolefin available from Degussa, was melted and dissolved in Aromatic® 100 resulting in a 20% solution. 100 pbw of this solution were mixed with 2.4 pbw of conductive carbon black and 0.93 pbw talc and dynomilled in a horizontal dispersion mill to achieve a minimum 4 fineness of grind on the Hegman Gage. Subsequently, 112 pbw of toluene were added and 1.91 pbw of a 1% solution of dibutyl tin dilaurate in Aromatic® 100.

The resulting primer composition was applied on a series of panels of thermoplastic material (Reactor Grade TPO, CA 186 AC of Basell) at a dry film thickness of about 5 - 10 µm. Subsequently, a two-component solvent borne urethane base coat was applied at about 38 µm dry film thickness. The base coat was based on a hydroxy-functional polyester cross-linked by an isocyanate cross-linker. The primer and the base coat were flash dried for 5 minutes at room temperature. Subsequently, a two-component urethane clear coat, based on hydroxy-functional acrylic resin and an isocyanate cross-linker, was applied. After 10 minutes flash drying, the entire system was baked at 80°C for 30 minutes.

### Example 2

Example 1 was repeated, but with a different base coat / clear coat system. The base coat was a one-component solvent borne composition based on a polyester polyol and a melamine cross-linker. The clear coat was a one-component solvent borne composition based on a polyurethane polyol and a melamine cross-linker. After application, the complete system was baked at a temperature of 120°C for 30 minutes.

The panels were tested in conformity with General Motors specifications, using the test methods specified in Table 1.

**Table 1**

| Test | Test method | Test results for Examples 1 and 2 |
|---|---|---|
| 240 hrs. humidity adhesion | GM 4465 P, GM 9071 P | Pass adhesion |
| Thermal shock | GM 9525 P | Pass adhesion |
| Water jet | GM 9531 P | Pass adhesion |
| 5 pint freezer gravel, 45° | SAE J 400 | Meet various OEM Specifications |
| Gasoline immersion | GM 9501 p, method B | Pass 30-minute immersion time |

### Comparative Example A

Vestoplast® 708, a non-silanated grade, was melted and dissolved in Aromatic® 100, resulting in a 20% solution. From each of these grades a primer composition similar to that of Example 1 was made, except for withholding 1% solution of dibutyl tin dilaurate in Aromatic® 100. The resulting primer composition was applied on a series of panels of thermoplastic material (Reactor Grade TPO, CA 186 AC of Basell) at a dry film thickness of about 5 - 10 µm. Subsequently, a base coat / clear coat was applied and baked as described in Example 1.

On testing for adhesion as per GM test method GM9071 P, it was observed that the base coat had no adhesion to the primer layer.

### Comparative Example B

Comparative Example A was repeated using Vestoplast® 828 instead of Vestoplast® 708. Vestoplast® 828 is a polyolefin without silane-functional groups. The test results were the same as in Comparative Example A.

### Comparative Examples C and D

Examples 1 and 2 were repeated using, in both cases, a chlorinated polyolefin primer, commercially available as Rohm and Haas HP 21054-4B1. The test results were similar to those for Examples 1 and 2.

### Example 3

Vestoplast® 206 was melted and dissolved in Aromatic® 100 resulting in a 20% solution. 71.04 pbw of this solution were mixed with 4.3 pbw of Aromatic® 150, 3.72 pbw of Aromatic® 100 and 25 pbw of VMP Naphtha. Subsequently, 0.69 pbw of a 1% solution in Aromatic® 100 of dibutyl tin dilaurate was added to the mixture.

The resulting clear primer composition was sprayed on a molded-in-color (MIC) TPO substrate (Sequel 1140 YBTA) at a dry film thickness of about 5 - 10 µm. The primer was flash dried for 5 minutes at room temperature.

Subsequently, a two-component solvent borne urethane base coat was applied at about 38 µm dry film thickness. The base coat was based on a hydroxy-functional polyester cross-linked by an isocyanate cross-linker. The base coat was flash dried for 5 minutes at room temperature. Subsequently, a two-component urethane clear coat, based on hydroxy-functional acrylic resin and an isocyanate cross-linker, was applied. After 10 minutes of flash drying, the entire system was baked at 80°C for 30 minutes.

The panels were tested in accordance with General Motor test procedure GM4465P and GM9071 P for 240 hours humidity adhesion. The test results met the procedure criteria of no loss of adhesion or formation of blisters after humidity exposure.

Repeating the experiment using extrusion grade TPO (Sequel E3000 and Indure 1500 HG) substrates gave the same results.

### Example 4

A clear primer was made as in Example 3 and applied on a molded-in-color (MIC) TPO substrate (Sequel 1140 YBTA) at a dry film thickness of about 5 - 10 µm. The primer was flash dried for 5 minutes at room temperature.

A one component base coat based on a polyester polyol and a melamine crosslinker was applied over the primed substrate. Subsequenly, a one component solvent borne clear coat was applied, based on a polyurethane polyol and a melamine crosslinker. After application, the complete system was baked at a temperature of 120°C for 30 minutes.

The same tests were run as in Example 3. No loss of adhesion or blister formation occurred. Repeating the experiment using extrusion grade TPO (Sequel E3000 and Indure 1500 HG) substrates gave the same results.

### Example 5

Vestoplast® 206 was melted and dissolved in Aromatic® 100 resulting in a 20% solution. 35.63 pbw of this solution were mixed with 3.63 pbw of Aromatic® 100, 1.66 pbw of conductive carbon black, and 0.65 pbw of precipitated barium sulphate (Blanc Fixe). This mixture was dynomilled in a horizontal dispersion mill to achieve a minimum 4 fineness of grind on the Hegman Gage.

Subsequently, 4.2 pbw of Aromatic® 150, 19.91 pbw of the 20% Vestoplast 206 solution, 19.80 pbw of VMP Naphtha, 8.47 of Aromatic® 100 and 0.55 pbw of a 1% solution of dibutyl tin dilaurate in Aromatic® 100 was added. To this mixture, 5.49 pbw of a 20% solution in xylene of an alkylated aromatic hydrocarbon resin (Nevchem® 140, available from Neville Chemical Company) was added. Addition of this resin was observed to significantly improve the in-can stability of the primer.

The resulting primer composition was applied on a series of panels of thermoplastic material (Reactor Grade TPO, CA 186 AC of Basell) at a dry film thickness of about 5 -10 µm. Subsequently, as in Example 1, a two-component solvent borne urethane base coat was applied at about 38 µm dry film thickness. The base coat was based on a hydroxy-functional polyester cross-linked by an isocyanate cross-linker. The primer and the base coat were flash dried for 5 minutes at room temperature. Subsequently, a two-component urethane clear coat, based on a hydroxy-functional acrylic resin and an isocyanate cross-linker, was applied. After 10 minutes of flash drying, the entire system was baked at 80°C for 30 minutes. The panels were tested the same way as in example 1. Test results were similar (see Table 1).

## Claims

1. A method of coating a non-polar substrate comprising the steps of applying a primer comprising one or more silane-functional non-polar polymers on the non-polar substrate and subsequently applying one or more layers of a pigmented coating over the primer layer.

2. The method according to claim 1, wherein the coating cool on applied over the primer is a base coat and subsquently one or more layers of a clear coat are applied over the base coat.

3. The method according to claim 2, wherein to base coat and the clear coat are applied wet-on-wet and jointly cured in a subsequent step.

4. A primer composition comprising an alkylated aromatic hydrocarbon resin and a non-polar polymer, wherein the polymer comprises silane groups.

5. The primer composition according to claim 4, wherein the polymer is a polyolefin.

6. The primer composition according to claim 5, wherein the polyolefin is a polypropylene.

7. The primer composition according to claim 4, wherein it comprises one or more conductive pigments.

8. The primer composition according to daim 4, wherein it comprises a slianol condensation catalyst.

9. The primer composition according to claim 8, wherein the silanol condensation catalyst is an organotin compound.

10. The primer composition according to claim 9 such that the organotin compound is dibutyl tin dilaurate.

11. The primer composition according to claim 4, wherein the polymer comprises up to 20 wt.% of silane-functional groups, e.g., between 3-10%, e.g., about 5% by weight of the polymer.

12. A non-polar substrate coated according to claim 1.

13. The non-polar substrate according to claim 12, wherein the substrate is a polyolefin substrate.

14. The non-polar substrate according to claim 13, wherein the polyolefin substrate is a polypropylene substrate.

15. The non-polar substrate according to claim 14, wherein the substrate is a rubber-modified polypropylene.

## Revendications

1. Procédé pour revêtir un substrat non polaire, comprenant les étapes consistant à appliquer un apprêt comprenant un ou plusieurs polymères non polaires à fonctionnalité silane sur le substrat non polaire, et ensuite à appliquer une ou plusieurs couches d'un revêtement pigmenté sur la couche d'apprêt.

2. Procédé selon la revendication 1, dans lequel la composition de revêtement appliquée sur l'apprêt est un revêtement de base et ensuite une ou plusieurs couches d'un revêtement transparent sont appliquées sur le revêtement de base.

3. Procédé selon la revendication 2, dans lequel le revêtement de base et le revêtement transparent sont appliqués dans un état humide sur humide et durcis de manière concomitante dans une étape subséquente.

4. Composition d'apprêt comprenant une résine hydrocarbonée aromatique alkylée et un polymère non polaire, dans laquelle le polymère comprend des groupes silane.

5. Composition d'apprêt selon la revendication 4, dans laquelle le polymère est une polyoléfine.

6. Composition d'apprêt selon la revendication 5, dans laquelle la polyoléfine est un polypropylène.

7. Composition d'apprêt selon la revendication 4, comprenant un ou plusieurs pigments conducteurs.

8. Composition d'apprêt selon la revendication 4, comprenant un catalyseur de condensation de silanol.

9. Composition d'apprêt selon la revendication 8, dans laquelle le catalyseur de condensation de silanol est un composé organique de l'étain.

10. Composition d'apprêt selon la revendication 9, dans laquelle le composé organique de l'étain est le dilaurate de dibutyl-étain.

11. Composition d'apprêt selon la revendication 4, dans laquelle le polymère comprend jusqu'à 20 % en poids de groupes à fonctionnalité silane, par exemple entre 3 et 10 %, par exemple environ 5 % en poids du polymère.

12. Substrat non polaire revêtu conformément à la revendication 1.

13. Substrat non polaire selon la revendication 12, dans lequel le substrat est un substrat en polyoléfine.

14. Substrat non polaire selon la revendication 13, dans lequel le substrat en polyoléfine est un substrat en polypropylène.

15. Substrat non polaire selon la revendication 14, dans lequel le substrat est un polypropylène modifié avec du caoutchouc.

## Patentansprüche

1. Verfahren zur Beschichtung eines unpolaren Substrats, umfassend die Schritte des Auftragens einer ein oder mehrere unpolare Polymere mit einer Silanfunktionalität umfassenden Grundierung auf das unpolare Substrat und anschließend des Auftragens einer oder mehrerer Schichten einer pigmentierten Beschichtung auf die Grundierschicht.

2. Verfahren nach Anspruch 1, wobei die auf der Grundierung aufgetragene Beschichtungszusammensetzung ein Grundlack ist und anschließend eine oder mehrere Schichten eines Klarlacks auf den Grundlack aufgetragen werden.

3. Verfahren nach Anspruch 2, wobei der Grundlack und der Klarlack nassauf-nass aufgetragen und in einem anschließenden Schritt zusammen gehärtet werden.

4. Grundierzusammensetzung, umfassend ein alkyliertes, aromatisches Kohlenwasserstoffharz und ein unpolares Polymer, wobei das Polymer Silangruppen umfasst.

5. Grundierzusammensetzung nach Anspruch 4, wobei das Polymer ein Polyolefin ist.

6. Grundierzusammensetzung nach Anspruch 5, wobei das Polyolefin ein Polypropylen ist.

7. Grundierzusammensetzung nach Anspruch 4, die ein oder mehrere leitfähige Pigmente umfasst.

8. Grundierzusammensetzung nach Anspruch 4, die einen Silanol-Kondensationskatalysator umfasst.

9. Grundierzusammensetzung nach Anspruch 8, wobei der Silanol-Kondensationskatalysator eine Organozinn-Verbindung ist.

10. Grundierzusammensetzung nach Anspruch 9, wobei die Organozinn-Verbindung Dibutylzinndilaurat ist.

11. Grundierzusammensetzung nach Anspruch 4, wobei das Polymer bis zu 20 Gew.-% silanfunktionelle Gruppen, z.B. zwischen 3 und 10 %, z.B. etwa 5 %, bezogen auf das Gewicht des Polymers, umfasst.

12. Unpolares Substrat, beschichtet gemäß Anspruch 1.

13. Unpolares Substrat nach Anspruch 12, wobei das Substrat ein Polyolefin-Substrat ist.

14. Unpolares Substrat nach Anspruch 13, wobei das Polyolefin-Substrat ein Polypropylen-Substrat ist.

15. Unpolares Substrat nach Anspruch 14, wobei das Substrat ein kautschukmodifiziertes Polypropylen ist.
